(19) Europäisches Patentamt
European Patent Office
Office européen des brevets

(11) **EP 1 428 226 B1**

(12) **EUROPEAN PATENT SPECIFICATION**

(45) Date of publication and mention
of the grant of the patent:
**28.01.2009 Bulletin 2009/05**

(51) Int Cl.:
**G21C 1/30** *(2006.01)*     **G21C 1/06** *(2006.01)*

(21) Application number: **02775009.0**

(22) Date of filing: **19.09.2002**

(86) International application number:
**PCT/HU2002/000091**

(87) International publication number:
**WO 2003/025951 (27.03.2003 Gazette 2003/13)**

(54) **METHOD OF AND APPARATUS FOR TRANSMUTING RADIOACTIVE WASTE**

VERFAHREN UND APPARAT ZUM TRANSMUTIEREN VON RADIOAKTIVEM ABFALL

PROCEDE ET APPAREIL DE TRANSMUTATION DE DECHETS RADIOACTIFS

(84) Designated Contracting States:
**AT BE BG CH CY CZ DE DK EE ES FI FR GB GR IE IT LI LU MC NL PT SE SK TR**

(30) Priority: **20.09.2001 HU 0103762**

(43) Date of publication of application:
**16.06.2004 Bulletin 2004/25**

(73) Proprietor: **BUDAPESTI MÜSZAKI ES GAZDASAGTUDOMANYI EGYETEM H-1111 Budapest (HU)**

(72) Inventors:
• **CSOM, Gyula**
**H-1029 Budapest (HU)**
• **ASZODI, Attila;**
**H-1181 Budapest (HU)**
• **FEHER, Sándor**
**H-1025 Budapest (HU)**
• **SZIEBERTH, Máté**
**H-1025 Budapest (HU)**

(74) Representative: **Lorenz, Werner Lorenz & Kollegen Alte Ulmer Strasse 2 89522 Heidenheim (DE)**

(56) References cited:
**WO-A-00/00986**      **US-A- 5 160 696**
**US-B1- 6 233 298**

## Description

Scope of the invention

The present invention relates to a method of and an apparatus for transmuting radioactive waste containing long-lived radioisotopes and/or minor actinide isotopes and/or fission products.

Background art

Radioactive wastes originating from nuclear power plants and radioisotopes of long half-life accumulating in the spent fuel represent a tankential danger. Different methods and means are used in order to eliminate or diminish this danger. Presently, the so-called geological storage is the widest spread method. Essentially, it means that the radioactive waste is placed in well protected and guarded underground cavities which allow to escape radioisotopes or radiations into the environment only on a level below the prescribed limits. This method has a number of significant disadvantages. First to mention is the fact that the waste will become harmless only after a very long (the order of million years) storage period This questions the "final" character just upon psychological grounds, notwithstanding numerous problems of different sort. It is a further drawback of this solution that the energy content of heavy isotopes being present in the waste - first of all of plutonium isotopes - remains unexploited.

In some cases, in order to eliminate the latter disadvantage, spent fuel is reprocessed and the energetically useful uranium and plutonium isotopes are recycled as mixed uranium-plutonium-oxide (MOX) fuel into the nuclear power plant This solution improves the energy balance, there remains, however, the problem that the safe storage of the so-called minor actinides being heavier than plutonium and having long half-life, further that of some fission products of longer half-life has to be accomplished.

Much more promising results could be expected from the known method of converting long-lived actinides (plutonium isotopes and minor actinide isotopes), further long-lived fission products into short-lived or stable isotopes by means of nuclear transformation (transmutation). Using this method, both the radioactivity content of wastes and the time period necessary for the wastes to decay to an acceptable radiation level can be significantly reduced. In this way, the conditions of geological storage can be considerably improved.

The high neutron fluxes necessary for transmutation can be achieved in different nuclear plants such as common thermal and fast reactors, furthermore thermal and fast reactors specifically designed for transmutation, and accelerator driven subcritical systems (the latters realizing non-self sustaining chain reaction). Subcritical systems can be equipped with moderators (in this case generally thermal neutron spectrum is produced) or can be built without moderators (in this case generally fast neutron spectrum is produced).

Researches of last years have proved that transmutation is not only a theoretical option but can be realized in practice as well. Reprocessing of the spent fuel and partitioning of the elements to be transmuted are obligatory parts of the transmutation process. Therefore, this method is called P&T (Partitioning and Transmutation) technology as well. (See "Actinide and Fission Product Partitioning and Transformation" conference - Proceedings of the Fifth International Information Exchange Meeting, Mol, Belgium, 25-27 November 1998.)

Among nuclear plants constructed primarily for transmutation the so-called molten salt type nuclear reactors and subcritical systems seem to be most promising. In these facilities, the fuel and material to be transmuted are circulated in molten salt.

US patent specification No. 6,233,298 describes an accelerator driven subcritical system performing primarily transmutation and producing secondarily electric energy. With this system, so-called spallation neutrons created by a proton beam of the accelerator within a target are multiplied within a subcritical system equipped with solid graphite moderators in which molten salts containing plutonium and minor actinides and/or fission products circulate. The molten salts are comprised of fluoride salts and/or chloride salts. This subcritical system is arranged within a container surrounded by a shell construction. The target interacting with the proton beam is made of a material comprising at least one of lead or bismuth or is made of the molten salts themselves, which contain the material to be transmuted.

Transmutational facilities using molten salts have the substantial advantage over common heterogeneous systems using solid fuel that the former ones can more easily be equipped with radioisotope-partitioning devices. However, the known molten salt systems have the drawback that the efficiency of the transmutation is rather law, since molten salts containing the isotopes to be transmuted are circulated in a single common space, there being no possibility to exploit the spatial distribution of the neutron spectrum and neutron flux during the transmutation process. It is a further drawback that the conditions of the transmutation process cannot be adjusted in the way of progress, only the length of the period from the removal of the spent fuel from the nuclear reactor to the start of the transmutation process can be varied

Object of the present invention is to eliminate the above disadvantages. Thus the present invention aims at creating a method of and an apparatus for transmuting radioactive waste containing long lived radioisotopes, especially plutonium isotopes and/or minor actinide isotopes and/or fission products, which method and apparatus make it possible to change different parameters of the transmutation process and to exploit the spatial variation of the neutron spectrum and neutron flux during the transmutation process, thereby securing the opportunity to substantially increase the efficiency of the transmutation and which, consequently, requires storage of radioactive wastes burdening the environment in a much lower extent and in a much shorter period than before. Thus, the long-term repositories can be designed for a shorter service period and can be operated more safely.

Summary of the invention

The present invention is based on the perception that if a molten salt reactor or subcritical system, whose concept as such is known, is partitioned into several regions, which although flow-technically separated, altogether form a unity in terms of reactor physics, and in which different neutron spectra and neutron flux are achieved, and to each of which a flow-technically independent circulating system is connected, then the different radioisotopes can be transformed, in given cases in multiple steps, with the parameters corresponding to the individual transmutational requirements, and thus, by taking advance of the changing transmutational conditions due to the uneven spatial distribution of the neutron flux and neutron spectrum, the efficiency of the transformation can be increased Within the scope of the said solution, the neutron spectrum and neutron flux can be further adjusted, if desirable, using known means (moderators, reflectors etc.).

On the basis of the above recognition the above problem is solved by a method of transmuting in a nuclear facility radioactive waste containing long-lived radioisotopes, especially plutonium isotopes and/or minor actinide isotopes and/or fission products, in which method the radioactive waste is brought into a circulating medium, preferably made of molten salts; the radioactive waste containing medium is circulated in a system equipped with a heat exchanger, and the said medium is exposed to neutron radiation in at least one section of the said system; transmuting thereby long-lived radioisotopes of the radioactive waste to radioisotopes of shorter half-life or stable isotopes; and then at least one part of the resulting transmutation products is partitioned According to the present invention, the radioactive waste is circulated in successive cycles within two or more systems separated from each other flowtechnically; and the circulated radioactive waste is exposed to neutron radiations of different energy spectrum in each system by operating a reactor physically united entirety of the irradiated sections of the said systems as a nuclear reactor or an accelerator driven subcritical system.

One part of the neutron radiation is preferably produced by means of a target irradiated by a proton or electron beam originating from a particle accelerator. Preferably, a target comprising at least one of lead, bismuth and the radioactive waste containing circulated medium itself, respectively is used

The radioactive waste containing medium is preferably circulated within systems encircling each other.

In given cases, relaxation periods are imposed between subsequent circulations and irradiations performed in the individual systems.

In some cases, thermal neutron spectrum is preferably produced within at least one irradiated section by means of a moderator.

Preferably, a melt of at least one fluoride salt and/or chloride salt is used as circulated medium. Use of a melt of at least one of NaF, $ZrF_4$, $BeF_2$ and LiF as circulated medium is particularly advantageous.

Partition of at least one part of the transmutation products is preferably performed prior to handing over the circulated medium from one circulation system into a subsequent circulation system

Using the softest neutron radiation within the system loaded first and using the hardest neutron radiation within the system loaded last with the radioactive waste containing medium among the systems separated from each other flowtechnically is advantageous as well.

The problem as set is further solved by an apparatus for transmuting radioactive waste containing long-lived radioisotopes, especially plutonium isotopes and/or secondary actinide isotopes and/or fission products, the said apparatus having a circulating system equipped with a heat exchanger and being able to receive the radioactive waste containing circulating medium, preferably a molten salt. According to the present invention, the apparatus comprises a nuclear reactor or an accelerator driven and, preferably, target containing subcritical system having two or more reactor regions separated from each other flowtechnically but, preferably, forming a neutronphysically united entirety; and each reactor region is connected to a circulating system independent from the remaining circulating systems and has a heat exchanger and, in given cases, a circulating pump and an expansion tank.

Preferably, the reactor regions are arranged within a reactor space surrounded by a common shell structure and are separated from each other by partitions.

In a preferred embodiment, the reactor regions surround each other, preferably in a coaxial arrangement.

In some cases, the expansion tanks are preferably connected to corresponding reactor regions via ascending pipes.

In other cases, the expansion tanks are preferably seated onto the reactor and are directly connected to the corresponding reactor regions.

In a preferred embodiment, the expansion tanks have gas-offtake pipes for removing gaseous fission products.

In some cases, the target is preferably formed by lead and/or bismuth and/or the radioactive waste containing circulated medium itself

In some cases, at least one reactor region preferably contains a moderator.

Brief description of the drawings

Below, exemplary embodiments of the present invention will be described with reference to the accompanying drawings in which

Fig. 1    is a diagram representing the fission and capture cross-sections of Pu-239 isotope as a function of the neutron energy;

Fig. 2    is a diagram representing the fission and capture cross-sections of Am-243 isotope as a function of the neutron energy;

Fig. 3    is a scheme of a three region molten salt type nuclear reactor realizing transmutation and producing energy;

Fig. 4    is a scheme of a three region molten salt type accelerator driven subcritical system realizing transmutation and producing energy;

Fig. 5    is a diagram showing change in time of resulting radiotoxicity of long-lived actinides produced in a nuclear reactor both in case of no transmutation and in case of use of different transmutation methods; and

Fig. 6    is a diagram showing change in time of total remaining relative hazard of long-lived actinides produced in a nuclear reactor both in case of no transmutation and in case of use of different transmutation methods.

Detailed description of the preferred embodiments

Long-lived radioisotopes being present in spent nuclear fuel belong to two basic groups. First one is the group of the actinides comprising so-called dominant actinides (Pu-238, Pu-239, Pu-240, Pu-241, Pu-242) and so-called minor actinides (Np-237, Am-241, Am-242, Am-242m, Am-243, Cm-243, Cm-244, Cm-245, Cm-246 etc.). The other is the group of long-lived fission products comprising first of all Tc-99 and I-129.

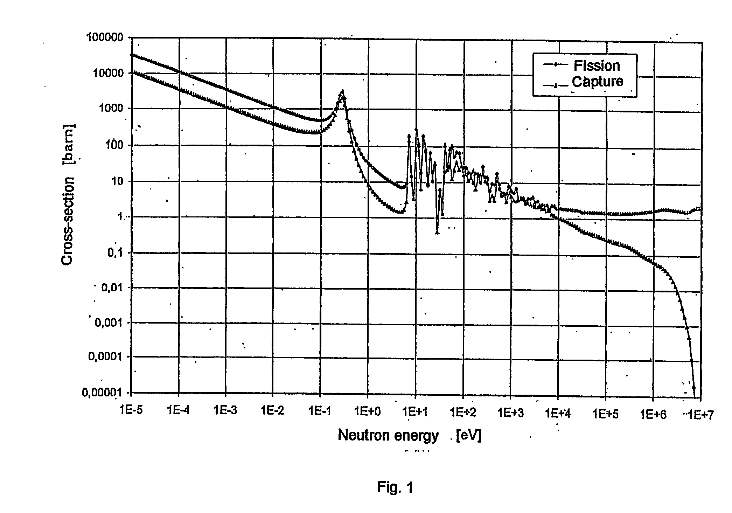

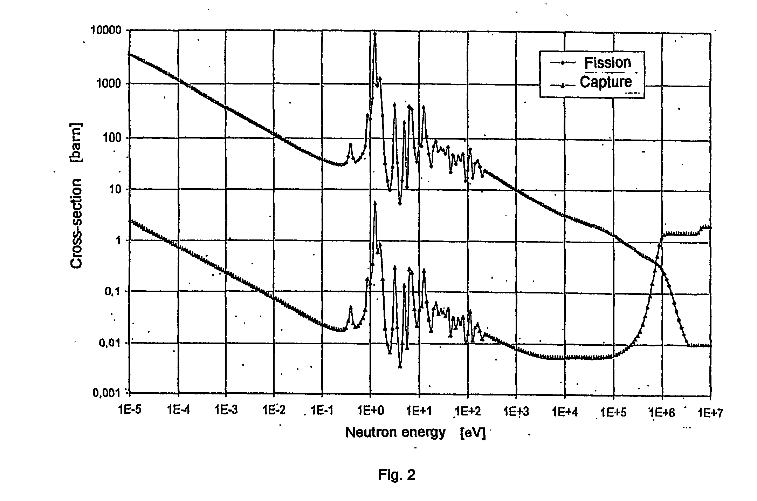

Generally, fission products can be transformed or eliminated at sufficient efficiency by means of capture of thermal neutrons. In order to implement this transmutational devices with thermal neutron spectrum and high neutron flux are needed In the case of actinides, however, capture of neutrons will result in unfavourable changes since actinides will turn into isotopes of even higher mass number and, mainly, of long half-life. In the case of actinides neutron caused fission will result in favourable changes. With some actinides (Pu-238, Pu-239, Pu-241, Am-242m, Cm-243 and Cm-245) fissure occurs even due to thermal neutrons, the proportion of unfavourable captures, however, is not negligible. Moreover, on the one hand the influence of high-energy neutrons results in fission with all actinides and, on the other hand, the ratio of fission probability to capture probability is much higher than in the case of nuclear reactions caused by thermal neutrons. Exemplary Figures 1 and 2 show that this ratio gradually increases in the region of high neutron energies. The same fact is reflected by Table 1 containing data of fission cross-section and capture cross-section data of actinides as a function of neutron energy. Thus, with actinides, transmuting devices of high flux of fast neutrons have to be preferred and, generally, the efficiency of transmutation increases as the neutron spectrum becomes harder.

There are, however, actinides for which individual transmutation technologies may be advantageous. With Np-237, Am-241 and Am-243 the following nuclear reactions and decays occur:

$$^{237}Np(n,\gamma)^{238}Np\xrightarrow[2,1d]{\beta^-}{}^{238}Pu(n,\gamma)^{239}Pu(n,f) \tag{1}$$

$$^{241}Am(n,\gamma)^{242}Am\xrightarrow[16h]{\beta^-}{}^{242}Cm\xrightarrow[163d]{\alpha}{}^{238}Pu(n,\gamma)^{239}Pu(n,f) \tag{II}$$

$$^{243}Am(n,\gamma)^{244}Am\xrightarrow[10h]{\beta^-}{}^{244}Cm\xrightarrow[18,1d]{\alpha}{}^{240}Pu(n,\gamma)^{241}Pu(n,f) \tag{III}$$

The first (n, y) reactions will occur with proper efficiency when thermal neutrons are used i.e. in devices with characteristically thermal neutron spectrum. In the case of the isotopes resulting from those reactions, however, use of fast neutrons is advantageous.

Table 1

| | $\sigma_f$, barn | | | | | | $\sigma_c$ barn | | | | | | $\sigma_f/\sigma_c$ | | | | | |
|---|---|---|---|---|---|---|---|---|---|---|---|---|---|---|---|---|---|---|
| neutron energy MeV | 0,1 | 0,5 | 1 | 2 | 5 | 10 | 0,1 | 0,5 | 1 | 2 | 5 | 10 | 0,1 | 0,5 | 1 | 2 | 5 | 10 |
| Np-237 | 0,017 | 0,543 | 1,144 | 1,66 | 1,43 | 2,19 | 1,17 | 0,379 | 0,156 | 0,0555 | 0,0182 | 0,0385 | 0,0145 | 1,43 | 9,22 | 29,9 | 78,8 | 56,8 |
| Pu-238 | 0,62 | 1,52 | 2,07 | 2,26 | 2,03 | 2,73 | 0,384 | 0,154 | 0,0571 | 0,0351 | 0,0162 | 0,00213 | 1,61 | 9,87 | 36,3 | 64,4 | 126 | 1280 |
| Pu-239 | 1,53 | 1,59 | 1,76 | 1,98 | 1,67 | 2,27 | 0,278 | 0.115 | 0,0676 | 0,0326 | 0,000968 | $1,5.10^{-8}$ | 5,48 | 13,9 | 26,0 | 60,9 | 1720 | $1,51.10^8$ |
| Pu-240 | 0,0539 | 0,526 | 1,55 | 1,73 | 1,49 | 2,15 | 0,365 | 0,170 | 0,095 | 0,0676 | 0,00229 | 0,000696 | 0,148 | 3,09 | 16,3 | 25,6 | 654 | 3080 |
| Pu-241 | 2,15 | 1,52 | 1,59 | 1,67 | 1,38 | 2,03 | 0,450 | 0,347 | 0,301 | 0,211 | 0,00525 | $1,12.10^{-8}$ | 4,78 | 4,37 | 5,27 | 7,91 | 263 | $1,81.10^8$ |
| Pu-242 | 0,0182 | 0,287 | 1,50 | 1,43 | 1,25 | 1,95 | 0,267 | 0,140 | 0,0909 | 0,0762 | 0,00195 | 0,000697 | 0,068 | 2,05 | 16,5 | 18,7 | 642 | 2800 |
| Am-243 | 0,00609 | 0,0565 | 1,26 | 1,50 | 1,50 | 2,05 | 1,40 | 0,504 | 0,302 | 0,0473 | 0,010 | 0,010 | 0,00434 | 0,112 | 4,18 | 31,7 | 150 | 205 |
| Cm-244 | 0,0495 | 0,575 | 2,08 | 1,92 | 1,99 | 2,98 | 0,393 | 0,227 | 0,101 | 0,0399 | 0,00647 | 0,000858 | 0,126 | 2,53 | 20,6 | 48,1 | 308 | 3480 |
| Cm-245 | 2,08 | 1,63 | 1,97 | 2,11 | 1,79 | 2,48 | 0,230 | 0,0862 | 0,0513 | 0,0236 | 0,00321 | 0,000346 | 9,06 | 19,0 | 38,3 | 89,4 | 559 | 7180 |

Effective fission cross-section ($\sigma_f$) and capture cross-section ($\sigma_c$) and $\sigma_f/\sigma_c$ ratio values of actinides vs. neutron energy

Thus, with the said isotopes, a so-called two-stage transmutation could give better results. Then, in a first stage a radiation spectrum of mainly thermal neutrons, in a second stage that of mainly fast neutrons is used. From the above reaction equation one can see that due to quite long half-life of Cm-242 and Cm-244 isotopes, furthermore to somewhat lower transmutability of the latter in comparison with their fission products it could be advantageous to insert a certain relaxation period prior to the start of the second transmutation stage.

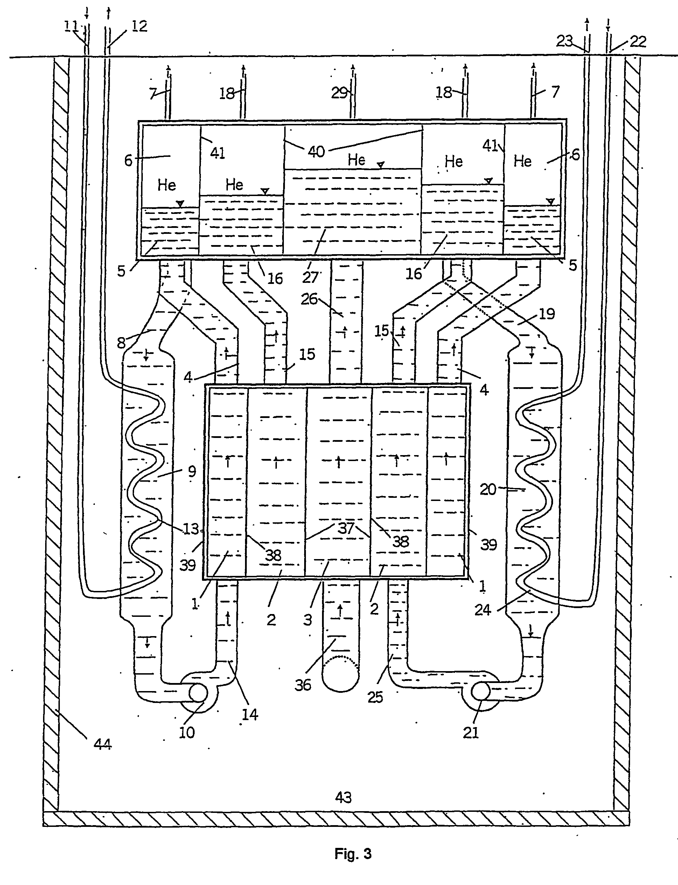

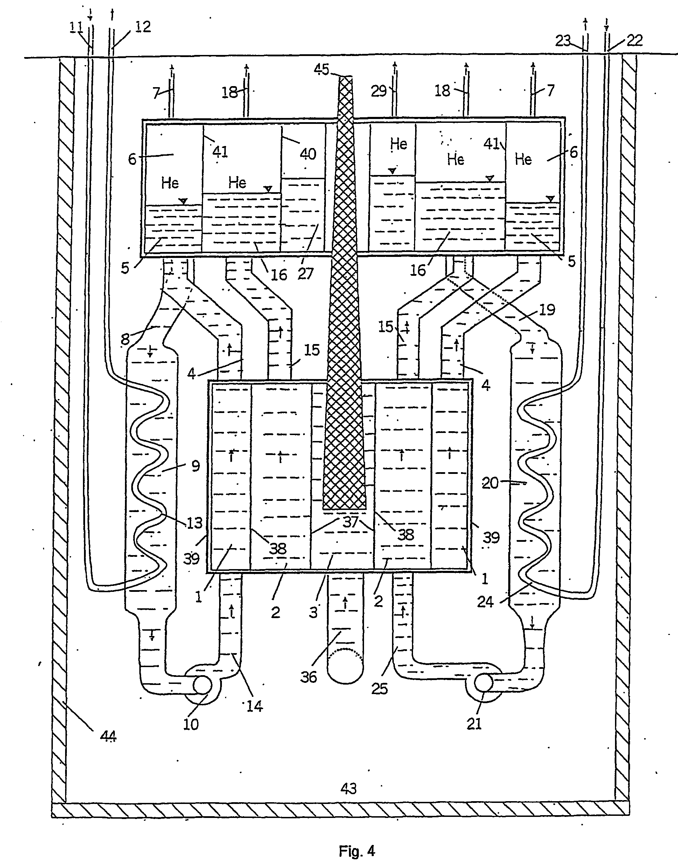

Thus, in order to achieve as effective as possible transmutation it is advantageous to expose radioactive waste to radiations of different neutron spectrum. Fig. 3 and Fig. 4 show examples of implementing transmutation in a substantially more effective way than before and of apparatuses appropriate to realize it.

Fig. 3 shows a molten salt type nuclear reactor having three reactor regions 1, 2, 3 of coaxial arrangement Said regions are separated from each other by metallic cylindrical partitions 37, 38. The reactor is surrounded by a shell construction 39. Outer reactor region 1 is connected via ascending pipes 4 to an upper expansion tank 5, intermediate reactor region 2 is connected via ascending pipes 15 to an upper expansion tank 16, and inner reactor region 3 is connected via ascending pipe 26 to an upper expansion tank 27. Similar to reactor regions 1, 2, 3, expansion tanks 5, 16, 27 are arranged coaxially with each other. Outer expansion tank 5 is separated from intermediate expansion tank 16 by a metallic cylindrical partition 41 and the intermediate expansion tank 16 is separated from inner expansion tank 27 by a partition 40 similar to partition 41. Outer expansion tank 5 has upper side gas-offtake pipes 7, intermediate expansion tank 16 is fitted with upper side gas-offtake pipes 18, and inner expansion tank 27 has an upper side gas-offtake pipe 29. Outer expansion tank 5 is connected via downcomer 8 to one (upper) end of a heat exchanger 9. The other (lower) end of the heat exchanger 9 is connected via circulating pump 10 to a lower intake pipe of reactor region 1. Similarly, intermediate expansion tank 19 is connected via downcomer 19, heat exchanger 20 and circulating pump 21 to intake pipe 25 of reactor region 2, and inner expansion tank 27 is connected via a downcomer and a heat exchanger (not shown) to intake pipe 36 of reactor region 3.

Secondary cooling medium circulating within an inner pipework 13 of heat exchanger 9 of circulation system of outer reactor region 1 is lead via pipes 11, 12 to steam generator units of one or more steam turbines (not shown) or - in case of gaseous cooling medium - to gas turbines (not shown). Similarly, secondary cooling medium circulating within an inner piping 24 of heat exchanger 20 of circulation system of outer reactor region 2 is lead via pipes 22, 23 to one or more steam turbines or gas turbines (not shown), and secondary cooling medium circulating within an inner pipework of the corresponding heat exchanger (not shown) of circulation system of inner reactor region 3 is lead to one or more steam turbines or gas turbines (not shown). Preferably, the secondary cooling medium is made of molten salts whose melting point is equal to or lower than that of the primary molten salt In certain cases, gaseous secondary cooling medium, preferably He, can be used as well. The warmed up secondary medium or the steam generated by the medium can be used to drive steam turbines or gas turbines and to produce electric energy. In case of a subcritical system, one part (about 10-20 %) of the electric energy is used to cover the energy demand of the particle accelerator, and the remaining part can be taken to a power network. Thus, the transmutation apparatus also acts as a plant that produces substantial amount of electric energy.

In certain cases, expansion tanks 5, 16 and 27 can be placed directly onto the top of the reactor. Then, ascending pipes 4, 15 and 26 leave out. In a further embodiment, expansion tanks 5, 16 and 27 can be arranged independently as well. Then, of course, partitions 40, 41 leave out. Expansion tanks are designed with such dimensions that the upper level of the molten salts remains above the prescribed minimum even with the highest possible density and below the prescribed maximum even with the lowest possible density.

Whole of the apparatus is arranged in the inner of a well 43 surrounded by a wall 44. Well 43 is constructed such that total quantity of molten salts collected in the bottom part thereof remains sufficiently subcritical even with the worst possible conditions and even in a case when all molten salts being present in the system get out from the system.

Generally, the exemplary transmutational apparatus as shown has a diameter and a height of a few meters.

The apparatus according to Fig. 3 operates as follows: Within independent circulating systems of reactor regions 1, 2 and 3 molten salts are circulated Preferably, fluoride salts and/or chloride salts are used as molten salts. Appropriate fluoride salts are e.g. $NaF$ and/or $ZrF_4$ and/or $BeF_2$ and/or $LiF$ and $(Pu+Ma)F_3$. Prior to taking them into the apparatus, radioactive waste containing radioisotopes to be transmuted are introduced into the molten salts (for the sake of simplicity, point of introduction is not shown in the figures). Totality of the flow-technically independent reactor regions 1, 2, 3 and of the fuel put into the molten salts form together a neutron physically united entity. Radioactive isotopes introduced with a quantity over the critical realize a selfsustaining chain reaction. Accordingly, neutron radiation resulting in different neutron spectrums and neutron fluxes within each reactor regions 1, 2 and 3 is produced. In given cases, some regions show a typically fast neutron spectrum, other regions are characterized by a thermal neutron spectrum (produced e.g. by means of moderators). Preferably, the moderator is formed of solid graphite occupying most part (generally 80 %) of volume of the given region (preferably the outermost one). The outermost region is preferably bordered by a reflector of a thickness of several ten centimetres. Preferably, the hardest neutron radiation is used within the innermost region.

Preferably, one transmutation step is realized in each region. After completing one transmutation step, individual regions can be connected with each other and the molten salt containing the isotopes to be transmuted can be transferred from one region to the next. Then, in given case, the molten salt of the last transmutation phase can be finally removed from the last region of the system replacing it by the molten salt of the phase before etc. (for the sake of simplicity, transfer and removal points are not shown). Consequently, the circulating medium of the first transmutation phase flown over from the first to the second region will be replaced by fresh molten salt containing the isotopes to be transmuted in the first region. Preferably, the last transmutation phase takes place in the innermost region arranged in the centre of the apparatus. With a system having a thermal neutron spectrum region as well, the first transmutation phase preferably takes place in that region. Accordingly, two step transmutations corresponding to reactions (I), (II) and (III) will be accomplished. In certain cases, a relaxation period can be inserted in between two transmutation phases. In this case, suitable isotope partitioning has to be performed between the two phases.

With the embodiment shown in Fig. 3 none of the regions is equipped with moderator, consequently, transmutation under mainly fast neutron type spectrum conditions takes place. When a reactor region having mainly thermal neutron spectrum is needed as well, a moderator, generally solid graphite, is used, preferably within the outermost reactor region. In that case, the nuclear reactor is preferably surrounded by a reflector construction, preferably also made of solid graphite. With a suitable volume ratio of graphite (preferably 80-90 %) within reactor region 1, appropriate thermal neutron spectrum for efficient transmutation can be produced within reactor region 1.

With the exemplary embodiment of the apparatus shown in Fig. 4, the multiple stage transmutation process of the present invention is implemented in a subcritical system (generally having an effective multiplication factor of 0.95-0.98) driven by a particle beam 45 originating from a particle accelerator (not shown). The construction of this apparatus differs from that of the apparatus according to Fig. 3 in that the base planes of cylinder like innermost reactor region 3 and innermost expansion tank 27, respectively, are of circular ring shape rather than of disc shape. Particle beam 45 is introduced along the axis of the whole system inside the said cylindrical components into the target material (not shown) arranged in reactor region 3. In certain cases, the target material is formed by the molten salt itself circulating within the innermost reactor region 3. On the one hand, the accelerator driven multiregion subcritical system has the advantage that in the innermost reactor region 3 surrounding the target material or acting as a target a substantially harder neutron spectrum can be achieved than in that of reactor region 3 of the nuclear reactor according to Fig. 3. On the other hand, due to an effective multiplication factor less than 1 and due to the fact that the particle accelerator can be switched off, this system is substantially more secure than a critical nuclear reactor.

Particle beam 45 can be formed of a proton beam or an electron beam. With a proton beam, particles hitting a lead or lead-bismuth target or the molten salt acting as a target produce spallation neutrons. With an electron beam, first bremsstrahlung is created within the target, and photoneutrons are then produced from the photons in (γ, n) reactions. Upon entering the subcritical system, spallation or photo neutrons cause fissions resulting in fission neutrons. The ratio of the number of fission neutrons to the number of entering spallation or photoneutrons (i.e. the so-called neutron gain factor) depends mainly on the value of the effective multiplication factor of the subcritical system. The greater this multiplication factor (i.e. the closer the subcritical system to criticality) the higher the neutron gain factor. Since the energy spectrum of fission neutrons is softer than that of spallation and photoneutrons the neutron spectrum obtained within a subcritical system depends on the effective multiplication factor $k_{eff}$ as well. For example, with $k_{eff}$ = 0,95, 95% of the resulting neutrons is produced in fissions.

In other respects, transmutation processes take place in the same way as described in connection with Fig. 3. Outermost reactor region 1 can be equipped with a moderator (made preferably of solid graphite) in the case of the apparatus according to Fig. 4. Then, in this region thermal neutron spectrum is produced. Similarly to the above case, in order to decrease the loss of neutrons and to soften the neutron spectrum within this region, outermost reactor region 1 is surrounded by a reflector (preferably also made of solid graphite).

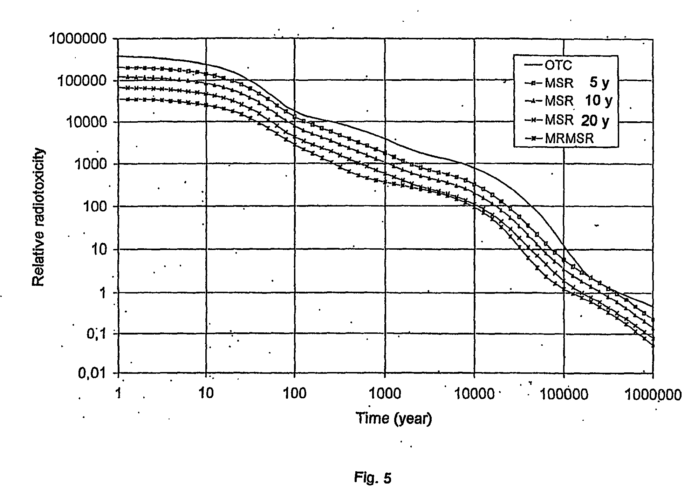

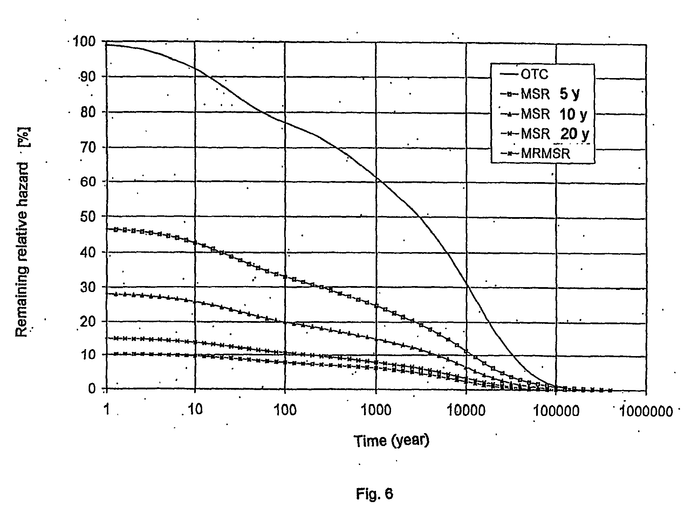

Using the solutions according to the present invention, substantially more efficient transmutation can be realized than by known molten salt type nuclear reactors or subcritical systems. As evidences thereto, calculated data of a five step transmutation realized in a molten salt type nuclear reactor according to the present invention are shown in Fig. 5 and Fig. 6. In the case taken as base for the calculations, the length of each transmutation step is one year. Thus, the material introduced into the apparatus in order to be transmuted is exposed to neutron radiation for five years and the amount of molten salt brought into and removed from the system is about one fifth of the total molten salt content of the system. Calculations performed for a conventional molten salt type nuclear reactor are used as a basis for comparison. In both cases, the actinides content and actinides composition of the spent fuel removed from a nuclear reactor of VVER-440 type is supposed. Calculational results are summarized in Figs. 5 and 6 and in Tables 2 and 3, respectively.

In Table 2, the number of nuclear reactors of VVER-440 type, which can be serviced by a conventional molten salt type nuclear reactor (MSR) and a molten salt type five-region nuclear reactor (MRMSR) according to the present invention are shown. The power of both nuclear reactors is 1000 $MW_e$. From the table it is apparent that the total amount of materials that can be transmuted in the two systems is nearly equal.

Table 2

| Number of nuclear reactors of VVER-440 type which can be served by a molten salt nuclear reactor of a power of 1000 MW$_e$ | | |
| --- | --- | --- |
| Type of transmuting nuclear reactor | Initial load | Additional load per year |
| MSR | 15,5 | 5,8 |
| MRMSR | 18,6 | 6,2 |

In Fig. 5 the change of radiotoxicity as a function of time is shown for different cases. Curve OTC represents a case without transmutation, curves MSR represent transmutations realized by means of conventional-molten salt type nuclear reactors with the assumption of continuous load and removal of full content of the system after 5, 10 and 20 years, respectively. Curve MRMSR represents data resulted for a five-region molten salt type nuclear reactor according to the present invention. It is apparent that the best result can be achieved by the latter technology. This fact is supported also by the diagram of Fig. 6 showing ratios of time integral values of radiotoxicity curves for given times (i.e. relative residual hazard values) as a function of time for the case of no transmutation and the cases of the above systems, respectively, supposing the same conditions as before. Initial values of relative residual hazard (i.e. values for t = 0) are summarized in Table 3.

Table 3

| Initial values of relative residual hazard for different cases | |
| --- | --- |
| Transmutation program | Initial relative residual hazard of the waste to be desposed of (%) |
| OTC (no transmutation) | 100 |
| MSR (5 years) | 47.16 |
| MSR (10 years) | 28.38 |
| MSR (20 years) | 15.19 |
| MRMSR | 10.35 |

From the above data it is apparent that transmutation implemented in a multiregion molten salt nuclear reactor according to the present invention will give the best results, although a five-region system cannot be regarded as an optimum. In addition, with the variant of the apparatus according to the present invention realized as an accelerator driven subcritical system even better results can be achieved, since, in this case, spatial distribution of the neutron spectrum is more advantageous with respect to the transmutation process.

**Claims**

1. A method of transmuting in a nuclear facility radioactive waste containing long-lived radioisotopes, especially plutonium isotopes and/or minor actinide isotopes and/or fission products, by introducing the radioactive waste into a circulating medium, preferably made of molten salts; circulating the radioactive waste containing medium in a system equipped with a heat exchanger, and exposing the said medium to neutron radiation in at least one section of the said system; thereby transmuting long-lived radioisotopes of the radioactive waste to radioisotopes of shorter half-life or stable isotopes; then partitioning at least one part of the resulting transmutation products, **characterized by** circulating the radioactive waste in successive cycles in three or more, expediently five, circulating systems and separated from each other flowtechnically; exposing the circulating radioactive waste to neutron radiations of different energy spectra in each circulating system by operating a reactor physically united entirety of the irradiated sections of the said circulating systems as a nuclear reactor or an accelerator driven subcritical, system; using the softest spectrum neutron radiation preferably within the circulating system loaded first, and using the hardest spectrum neutron radiation preferably within the circulating system loaded last with the radioactive waste containing medium among the systems separated from each other flowtechnically.

2. A method according to Claim 1, **characterized by** producing one part of the neutron radiation by means of a target irradiated by a proton or electron beam originating from a particle accelerator.

3. A method according to Claim 2, **characterized by** using a target comprising at least one of lead, bismuth or the radioactive waste containing circulated medium itself.

4. A method according to Claim 1 **characterized by** imposing relaxation periods in between at least two subsequent circulations and irradiations performed in the individual circulation systems.

5. A method according to Claim 1 **characterized by** producing thermal neutron spectrum within at least one irradiated section by use of a moderator.

6. A method according to Claim 1 **characterized by** using a melt of at least one fluoride salt and/or chloride salt as circulated medium.

7. A method according to Claim 6, **characterized by** the molten salt forming the circulated medium being selected from the group consisting of NaF, $ZrF_4$, $BeF_2$ or LiF.

8. A method according to Claim 1, **characterized by** performing partition of at least one part of the transmutation products prior to transferring the circulated medium from one circulation system into a subsequent circulation system.

**Patentansprüche**

1. Verfahren zum Transmutieren von radioaktivem Abfall, welcher langlebige Radioisotope, insbesondere Plutoniumisotope und/oder Actinid-Nebenisotope und/oder Spaltungsprodukte, aufweist, in einer kerntechnischen Anlage, durch Einführen des radioaktiven Abfalls in ein zirkulierendes Medium, welches vorzugsweise aus geschmolzenen Salzen hergestellt ist; Zirkulieren des den radioaktiven Abfall enthaltenen Mediums in einem mit einem Wärmetauscher ausgestatteten System und Aussetzen des Mediums einer Neutronenstrahlung in wenigstens einem Bereich des Systems; **dadurch** Transmutieren von langlebigen Radioisotopen des radioaktiven Abfalls zu Radioisotopen mit kürzerer Halbwertszeit oder stabilien Isotopen; dann Abtrennen von wenigstens einem Teil der sich ergebenden Transmutationsprodukten,
   **gekennzeichnet durch** Zirkulieren des radioaktiven Abfalls in aufeinanderfolgenden Zyklen in drei oder mehr, vorzugsweise fünf, zirkulierenden Systemen, die strömungstechnisch voneinander getrennt sind; Aussetzen des zirkulierenden radioaktiven Abfalls einer Neutronenstrahlung mit unterschiedlichen Energiespektren in jedem zirkulierenden System **durch** Betreiben eines Reaktors, der physikalisch mit der Gesamtheit der ausgestrahlten Bereiche des zirkulierenden Systems verbunden ist, als ein Nuklearreaktor oder ein hochenergiebeschleunigungsunterstütztes subkritisches System; Verwenden der weichsten Neutronenstrahlung des weichsten Spektrums vorzugsweise innerhalb des als erstes geladenen zirkulierenden Systems und Verwenden der Neutronenstrahlung des härtesten Spektrums vorzugsweise innerhalb des als letztes geladenen zirkulierenden Systems mit dem den radioaktiven Abfall beinhaltenden Medium unter den strömungstechnisch voneinander getrennten Systemen.

2. Verfahren nach Anspruch 1, **gekennzeichnet durch** das Erzeugen eines Teils der Neutronenstrahlung mittels eines Target, welches **durch** einen Protonen- oder Elektronenstrahl ausgestrahlt wurde, der von einem Teilchenbeschleuniger stammt.

3. Verfahren nach Anspruch 2, **gekennzeichnet durch** das Verwenden eines Target, welches wenigstens eines von Blei, Wismut oder das den radioaktiven Abfall beinhaltende zirkulierende Medium selbst aufweist.

4. Verfahren nach Anspruch 1, **gekennzeichnet durch** das Aufbringen von Relaxationsperioden zwischen wenigstens zwei aufeinanderfolgenden Zirkulierungen und Ausstrahlungen, die in den einzelnen Zirkulationssystemen ausgeführt werden.

5. Verfahren nach Anspruch 1, **gekennzeichnet durch** das Erzeugen eines thermischen Neutronenspektrums innerhalb wenigstens eines ausgestrahlten Bereichs unter Verwendung einer Bremssubstanz.

6. Verfahren nach Anspruch 1, **gekennzeichnet durch** das Verwenden einer Schmelze von wenigstens einem von Fluoridsalz und/oder Chloridsalz als zirkulierendes Medium.

7. Verfahren nach Anspruch 6, **dadurch gekennzeichnet, dass** das geschmolzene Salz, welches das zirkulierende Medium bildet, aus der Gruppe ausgewählt wird, die aus NaF, $ZrF_4$, $BeF_2$ oder LiF besteht.

8. Verfahren nach Anspruch 1, **gekennzeichnet durch** das Durchführen einer Abtrennung von wenigstens einem Teil der Transmutationsprodukte vor dem Transferieren des zirkulierenden Mediums von einem Zirkulationssystem in ein nachfolgendes Zirkulationssystem.

## Revendications

1. Procédé de transmutation dans une installation nucléaire des déchets radioactifs contenant des radio-isotopes à longue vie, spécialement des isotopes du plutonium et/ou des isotopes d'actinides mineurs et/ou des produits de fission, consistant à introduire les déchets radioactifs dans un milieu mis en circulation, composé de préférence de sels fondus, à faire circuler le milieu contenant les déchets radioactifs dans un système équipé d'un échangeur de chaleur, et à exposer ledit milieu à un rayonnement neutronique dans au moins une section dudit système ; transmutant ainsi les radio-isotopes à longue vie des déchets radioactifs en radio-isotopes ayant une demi-vie plus courte ou en isotopes stables ; puis séparant au moins une partie des produits de transmutation résultants, **caractérisé par** la circulation des déchets radioactifs en cycles successifs dans trois ou plus de trois, avantageusement cinq, systèmes de circulation séparés les uns des autres en technique de l'écoulement ; l'exposition des déchets radioactifs mis en circulation à des rayonnements neutroniques d'un spectre d'énergie différent dans chaque système de circulation en faisant travailler l'ensemble des sections irradiées desdits systèmes de circulation qui font partie d'un réacteur et qui sont réunies physiquement, comme un système sous-critique activé par un réacteur nucléaire ou par un accélérateur ; l'utilisation, de préférence, du rayonnement neutronique ayant le spectre le plus mou dans le système de circulation qui, parmi les systèmes séparés les uns des autres en technique de l'écoulement, a été le premier chargé avec le milieu contenant les déchets radioactifs ; et, de préférence, l'utilisation du rayonnement neutronique ayant le spectre le plus dur dans le système de circulation qui a été chargé le dernier.

2. Procédé selon la revendication 1, **caractérisé par** la production d'une partie du rayonnement neutronique au moyen d'une cible irradiée par un faisceau de protons ou d'électrons émis par un accélérateur de particules.

3. Procédé selon la revendication 2, **caractérisé par** l'utilisation d'une cible comprenant au moins un des éléments parmi le plomb, le bismuth ou le milieu mis en circulation contenant les déchets radioactifs lui-même.

4. Procédé selon la revendication 1, **caractérisé par** l'imposition de périodes de relaxation entre au moins deux circulations et irradiations successives exécutées dans les systèmes de circulation individuels.

5. Procédé selon la revendication 1, **caractérisé par** la production d'un spectre de neutrons thermiques dans au moins une section irradiée à l'aide d'un modérateur.

6. Procédé selon la revendication 1, **caractérisé par** l'utilisation en tant que milieu en circulation d'un bain fondu d'au moins un fluorure et/ou d'un chlorure.

7. Procédé selon la revendication 6, **caractérisé par** le choix du sel fondu qui forme le milieu mis en circulation dans le groupe composé de NaF, $ZrF_4$, $BeF_2$ ou Li F.

8. Procédé selon la revendication 1, **caractérisé par** l'exécution de la séparation d'au moins une partie des produits de transmutation avant le transfert du milieu mis en circulation d'un système de circulation à un système de circulation suivant.

Fig. 1

Fig. 2

Fig. 3

EP 1 428 226 B1

Fig. 4

15

Fig. 5

Fig. 6

Time (year)

Remaining relative hazard [%]

OTC
MSR 5 y
MSR 10 y
MSR 20 y
MRMSR

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6233298 B

**Non-patent literature cited in the description**

- Actinide and Fission Product Partitioning and Transformation. *conference - Proceedings of the Fifth International Information Exchange Meeting,* 25 November 1998